(19) **Europäisches Patentamt / European Patent Office / Office européen des brevets**

(11) **EP 4 757 098 A1**

(12) **EUROPEAN PATENT APPLICATION**

(43) Date of publication:
**10.06.2026 Bulletin 2026/24**

(21) Application number: **24383329.0**

(22) Date of filing: **05.12.2024**

(51) International Patent Classification (IPC):
**H02J 3/06** (2026.01)     **H02J 3/26** (2026.01)
**H02J 3/48** (2026.01)

(52) Cooperative Patent Classification (CPC):
**H02J 3/26; H02J 3/06; H02J 3/48**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Universitat Politècnica De Catalunya
08034 Barcelona (ES)**

(72) Inventors:
• **ALBERNAZ LACERDA, Vinicius**
  **08028 Barcelona (ES)**
• **PRIETO ARAUJO, Eduardo**
  **08028 Barcelona (ES)**
• **GOMIS BELLMUNT, Oriol**
  **08028 Barcelona (ES)**
• **CHEAH MAÑÉ, Marc**
  **08028 Barcelona (ES)**

(74) Representative: **Torner, Juncosa I Associats, SL
C / Pau Claris, 108, 1r 1a
08009 Barcelona (ES)**

(54) **COMPUTER IMPLEMENTED METHOD FOR TIME-DOMAIN PHASOR SIMULATION OF A POWER GRID IN AN EMT SIMULATION SOFTWARE**

(57) A computer implemented method, a system and computer program for time-domain phasor simulation of a power grid in an EMT simulation software are provided. The method a) builds a grid impedance matrix from passive electrical elements; b) separates the grid impedance matrix into real and imaginary parts; c) computes an inverse matrix of the real and imaginary parts of the grid impedance matrix, the inverse of the real part being named conductance matrix and the inverse of the imaginary part being named susceptance matrix; d) computes nodal current injections from active elements or sources; e) separates the computed nodal current injections into real and imaginary parts; f) executes (extended) nodal analysis algorithm on the conductance matrix with the real and imaginary parts of the current injection and on the susceptance matrix with the real and imaginary parts of the current injection, obtaining four voltage vectors; and g) builds a complex nodal voltage vector using the four voltage vectors.

| | |
|---|---|
| Build a grid impedance matrix | 101 |
| Separate grid impedance matrix into real and imaginary parts | 102 |
| Compute inverse matrix of the real part and of the imaginary part of the grid impedance matrix | 103 |
| Compute nodal current injections | 104 |
| Separate nodal current injections into real and imaginary parts | 105 |
| Execute (modified) nodal analysis algorithm | 106 |
| Build complex nodal voltage vector | 107 |

**Fig. 1**

EP 4 757 098 A1

**Description**

**TECHNICAL FIELD**

The present invention relates to Electromagnetic Transients (EMT) simulation solutions of power grids. More specifically, the invention relates to a computer implemented method for time-domain phasor simulation of a power grid in an EMT simulation software.

**BACKGROUND OF THE INVENTION**

Time domain phasor simulation has been extensively used due to its simplicity and computation efficiency. However, with the large connection of renewable generation interfaced by power electronics in the power grids, the simplifying assumptions of phasor simulation no longer hold, thus requiring EMT simulations to be used when analyzing power grids transients [1]-[3].

When the simulated grids are large, EMT simulations can take too long. In such cases, several methods can be used to speed up the simulation, such as using grid equivalents [4]-[6] to reduce the grid size or using co-simulation methods [7]-[9].

As several EMT software do not perform phasor simulation, the approach with co-simulation methods typically requires an external software running part of the grid in phasor, exchanging signals with the EMT software running the other portion of the grid. This approach has the drawbacks of requiring the user to work with two different modelling and simulation environments and to manually build the data exchange between platforms.

New solutions to allow EMT software to perform both EMT and phasor-simulation or co-simulation are therefore needed.

**DESCRIPTION OF THE INVENTION**

The object of present invention is thus to provide a new solution for time-domain phasor simulation of a power grid in an EMT simulation software.

This object is fulfilled by a method with the features of claim 1 and by a system and computer programs with the features of claims 8 and 9, respectively.

Embodiments of the present invention provide according to a first aspect a computer implemented method for time-domain phasor simulation in an EMT simulation software. The method comprises performing by one or more processors the following steps: a) building a grid impedance matrix from passive electrical elements (i.e. transformers, transmission lines, loads, power generators, etc.) of the power grid; b) separating the built grid impedance matrix into a real part and an imaginary part; c) computing an inverse matrix of the real part and of the imaginary part of the grid impedance matrix, the inverse of the real part being named conductance matrix and the inverse of the imaginary part being named susceptance matrix; d) computing nodal current injections from all the active elements or sources of the power grid; e) separating the computed nodal current injections into a real part and an imaginary part; f) executing a nodal analysis algorithm or an extended or modified nodal analysis algorithm on: f1) the conductance matrix computed in step c) with the real part of the nodal current injection computed in step e), f2) the conductance matrix computed in step c) with imaginary part of the nodal current injection computed in step e), f3) the susceptance matrix computed in step c) with the real part of the nodal current injection computed in step e), and f4) the susceptance matrix computed in step c) with the imaginary part of the nodal current injection computed in step e), obtaining four different real voltage vectors as a result; and g) building a complex nodal voltage vector using the obtained four different real voltage vectors.

According to the invention, the extended or modified nodal analysis algorithm can comprise the modified nodal analysis algorithm, the sparse nodal analysis algorithm or the modified augmented nodal analysis algorithm, among others.

In some embodiments, step g) further comprises computing a real part of the complex nodal voltage vector as the voltage vector obtained from step f1) minus the voltage vector obtained from step f4); and computing an imaginary part of the complex nodal voltage vector as the voltage vector obtained from step f2) plus the voltage vector obtained from step f3).

In some embodiments, the passive electrical elements comprise resistances, capacitances, and/or inductances. Alternatively, in other embodiments, the passive electrical elements comprises conductances and/or susceptances.

In some embodiments, calculations f1) to f4) are sequentially executed. Alternatively, in other embodiments, the calculations f1) to f4) are executed in parallel, thus speeding up the process.

Embodiments of the present invention also provide, according to a second aspect, a system for time-domain phasor simulation in an EMT simulation software. The system comprises at least one processor and at least one memory, wherein the at least one processor is configured to implement the method of the first aspect.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Present invention provides a novel solution to allow EMT software to perform both EMT and phasor simulations in the same environment. The invention separates the modelled power grid into four independent grids and sums their responses to build the final phasor response.

The invention addresses the issue of requiring two different platforms to perform co-simulation. It requires little modifications on EMT platforms, leaving their core untouched and facilitating its adoption. This can help co-simulate modern power grids and allow a seamless comparison of EMT and phasor simulation in the same platform, which is key to addressing modern power systems modelling challenges.

## BRIEF DESCRIPTION OF THE DRAWINGS

The previous and other advantages and features will be more fully understood from the following detailed description of embodiments, with reference to the attached figures, which must be considered in an illustrative and non-limiting manner, in which:

Fig. 1 is a flowchart illustrating an embodiment of the proposed method.
Fig. 2 Three-phase fault at bus 2. Generator's speeds.
Fig. 3 Three-phase fault at bus 2. Bus voltages.
Fig. 4 is another flowchart illustrating another embodiment of the proposed method.

## DETAILED DESCRIPTION OF THE INVENTION AND OF PREFERRED EMBODIMENTS

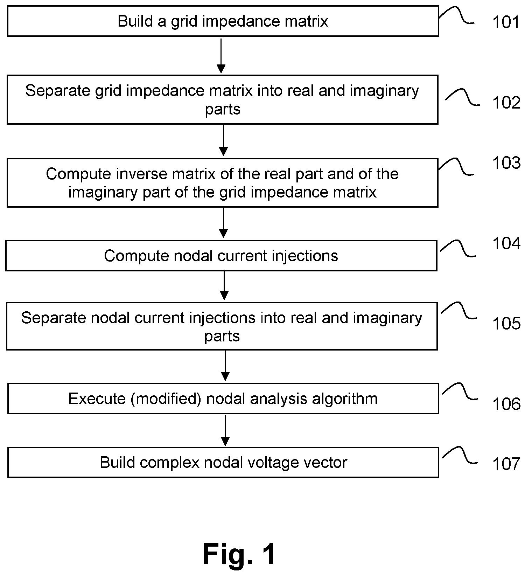

Fig. 1 illustrates an embodiment of the proposed method for time-domain phasor simulation in an EMT simulation of a power grid. The method decomposes the conventional nodal analysis algorithm or its extended or modified variants, such as the Modified Nodal Analysis Algorithm (MANA) [10], the Sparse Nodal Analysis Algorithm, or the Modified Augmented Nodal Analysis Algorithm, into real and imaginary components. These components are then used to construct four independent grids composed exclusively of real numbers. This approach facilitates implementation in EMT simulation tools, which can operate either sequentially or in parallel.

The method begins by constructing (step 101) a grid impedance matrix from the passive electrical elements of the power grid. Once the impedance matrix is built, it is decomposed (step 102) into its real and imaginary parts. The inverse of each part is then computed (step 103), resulting in two matrices: the conductance matrix, derived from the inverse of the real part, and the susceptance matrix, derived from the inverse of the imaginary part. Subsequently, nodal current injections are calculated (step 104) based on all active elements or sources present in the power grid, and these injections are separated (step 105) into their real and imaginary components.

Following this, the nodal analysis algorithm, or an extended or modified version of it, is applied independently to four configurations (step 106): the conductance matrix paired with the real part of the nodal current injection, the conductance matrix paired with the imaginary part of the nodal current injection, the susceptance matrix paired with the real part of the nodal current injection, and the susceptance matrix paired with the imaginary part of the nodal current injection. This step generates four distinct real voltage vectors. Finally, these four real voltage vectors are combined (step 107) to construct a complex nodal voltage vector, completing the process.

Further details, including specific equations and additional explanations of the proposed method, are described in the following sections.

The conventional nodal analysis method in phasor format is represented by the equation:

$$Y\ V = \underline{I_n} \qquad (1)$$

where Y is a bus admittance matrix, V is a vector of unknown bus voltages, and $I_n$ is a vector of known nodal current injections. The underline ( _ ) symbol denotes that these matrices are composed of complex numbers. From this, equation (1) can be written as

$$\underline{V} = \underline{Z}\underline{I_n} \qquad (2)$$

where $\underline{Z} = \underline{Y}^{-1}$ represents the bus impedance matrix.

Rewriting equation (2) in terms of its real and imaginary parts, it yields to:

$$\underline{V} = (R + jX)\ (I_{re} + j\,I_{im}) \qquad (3)$$

where $R = Re(\underline{Z})$ is a bus resistance matrix, $X = Im(\underline{Z})$ is a bus reactance matrix, $I_{re} = Re(I_n)$ and $I_{im} = Im(I_n)$.

Expanding the multiplications in equation (3) and expressing it in terms of its real and imaginary parts gives:

$$\underline{V} = (RI_{re} - XI_{im}) + j(RI_{im} + XI_{re}) \qquad (4).$$

This decomposition demonstrates that the four terms in equation (4) are multiplications of a matrix (R or X) with a vector ($I_{re}$ or $I_{im}$), all of which consist solely of real numbers. These terms represent distinct contributions to the bus voltage vector, which can now be expressed as:

$$\underline{V} = (V_{re,R} - V_{im,X}) + j(V_{im,R} + V_{re,X}) \qquad (5)$$

where:

$$V_{re,R}=RI_{re},\ V_{im,X}=XI_{im},\ V_{im,R}=RI_{im},\ V_{re,X}=XI_{re}.$$

Observing equation (5) and based on the superposition theorem, one can find that the physical interpretation of equation (4) is that a power grid (e.g. an AC grid) can be split into four grids (e.g. DC grids), and that the sum of the voltages calculated in those four grids two by two gives the final bus voltage vector. All terms at the right-hand side of equation (4) comprise matrices and vectors of real numbers. This means that those four grids are composed only of resistors and power sources. Thus there are no electromagnetic transients in those grids and very large simulation time steps can be used. The time steps are limited only by the dynamic elements (e.g., governors, exciters, controllers) connected to these grids [11], as in phasor simulation. Moreover, as those terms are linear, they can be solved independently, for instance, in parallel computation, speeding up the simulation. After the method is applied, no signal processing is required to build back the phasors. The final response is given only by the summation of the four grids. The method affects only the electrical part of the system, leaving the control and protection parts also untouched.

The proposed method enables phasor simulation or co-simulation in EMT tools leaving the core of those tools untouched. This means that conventional EMT software packages, widely used in both industry and academia, to be seamlessly adapted into platforms capable of performing phasor simulation or co-simulation. In such configurations, a portion of the grid can be simulated in EMT while the remaining part is handled in phasor format. This flexibility also supports real-time simulation and hardware-in-the-loop (HIL) setups, enabling them to perform phasor simulation or co-simulation without requiring substantial modifications to their solvers. As many of these tools are based on the EMTP (Electromagnetic Transients Program) method, the proposed method retains compatibility with this approach while allowing for much larger time steps. This capability significantly expands the scope of simulation to include larger grids in phasor format, enhancing efficiency and scalability.

The proposed method can also be applied with the modified augmented nodal analysis method (MANA) [10]. For example, considering the case of independent voltage sources connected to a grid, the MANA method applies the following equation:

$$\underline{H}\ \underline{W} = \underline{S} \qquad (6)$$

which expands to:

$$\begin{bmatrix} \mathbf{Y} & \mathbf{A}_v^{\mathsf{T}} \\ \hline \mathbf{A}_v & \mathbf{0} \end{bmatrix} \begin{bmatrix} \mathbf{V} \\ \hline \mathbf{I_{vs}} \end{bmatrix} = \begin{bmatrix} \mathbf{I_n} \\ \hline \mathbf{V_s} \end{bmatrix} \qquad (7)$$

where $A_v$ is the voltage sources adjacency matrix, $\underline{I_{vs}}$ is a vector of unknown voltage source currents and $\underline{V_s}$ is a vector of known independent voltage sources.

Now, separating $\underline{H}^{-1}$ into real ($R_h$) and imaginary ($X_h$) parts, separating also $\underline{S}$ into real ($S_{re}$) and imaginary ($S_{im}$) parts and applying the same method as in equations (3) and (4), one gets:

$$\underline{W}= (R_h S_{re} - X_h S_{im}) + j(R_h S_{im} + X_h S_{re}) \qquad (8)$$

where all terms of the right-hand side of (8) are real and W hold the unknown phasor quantities (node voltages and voltage source current injections).

In some embodiments, it is recommended that the creation of the four grids is implemented internally and automatically in each tool, by using equations (3) and (4), freeing the user from doing this manually. This means that the user will still draw only one AC grid, and this grid will be transformed into four grids internally by the proposed tool. However, if one wishes to apply this method manually, one should follow these steps (provided that $\underline{Y}$, R and X are not singular).

In an embodiment, the method begins with building the bus admittance matrix $\underline{Y}$ (step i). Next, the bus impedance matrix $\underline{Z}$ is calculated (step ii) as the inverse of $\underline{Y}$, i.e., $\underline{Z} = \underline{Y}^{-1}$. The real and imaginary components of Z are then computed, where R = Re($\underline{Z}$) and X = Im($\underline{Z}$) (step iii).

Subsequently (step iv), the conductance matrix $G = R^{-1}$ and the susceptance matrix $B = X^{-1}$ are determined. Using these matrices, four DC grids are constructed: two based on G and two on B (step v). The grids are built applying the conventional algorithm used to build $\underline{Y}$ but in the reverse order: the resistance between two nodes $k$ and $m$ is $-1/G_{k,m}$ in one grid and $-1/B_{k,m}$ in the other grid, and the resistance between a node k and the ground is $1/\sum_{m=1}^{n} Gk, m$ for one grid and $1/\sum_{m=1}^{n} Bk, m$ for the other grid, where $n$ is the total number of nodes.

Once the four grids are implemented, DC current sources are connected to the respective nodes (step vi). Specifically, $I_{re}$ to one grid R, $I_{re}$ to one grid X, $I_{im}$ to the another grid R and $I_{im}$ to the another grid X. Following this, the respective voltages $V_{re,R}$, $V_{re,X}$, $V_{im,R}$, $V_{im,X}$ are measured and finally, the complex bus voltages V are calculated using equation (5) (step vii), reconstructing the AC voltage vector from the DC grid outputs.

Singularities might occur when calculating $G = R^{-1}$ and $B = X^{-1}$ if pure reactive branches are considered. Thus, in some embodiments, it is advisable to consider a very small conductance in parallel with capacitive branches and a very small resistance in series with inductive branches during matrix inversion. These adjustments are required only if the proposed method is to be applied manually, building the four DC grids from a given bus admittance matrix and connecting DC current sources. If the system is solved numerically by equations (3) and (4), these issues with matrix inversions do not occur, and pure reactive branches can be used. Moreover, negative resistances are expected to appear as a result of the method. Using negative resistances is correct in this case, and it poses no numerical problems to the simulation because the grid has no electrical dynamics.

Regarding the time-domain simulation, dynamic events were simulated in the IEEE 9-bus system [13] to assess the suitability of the proposed method to perform time-domain phasor simulation. Static and dynamic parameters of the system can be found at [14] and [15], respectively. A three-phase fault was applied to bus 2 between t=0.2 and t=0.4.

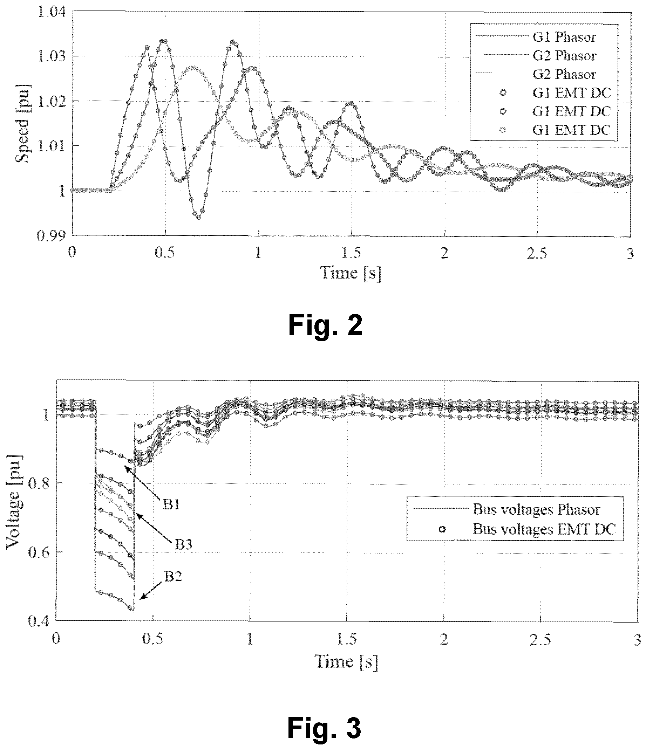

Fig. 2 and Fig. 3 show the three generator's speeds and the bus voltages during the event. The same simulation time step (1 ms) was used in both AC and DC phasor simulation methods. As can be observed in the figures, the proposed method produced identical results to those produced by conventional phasor AC, without any deviations.

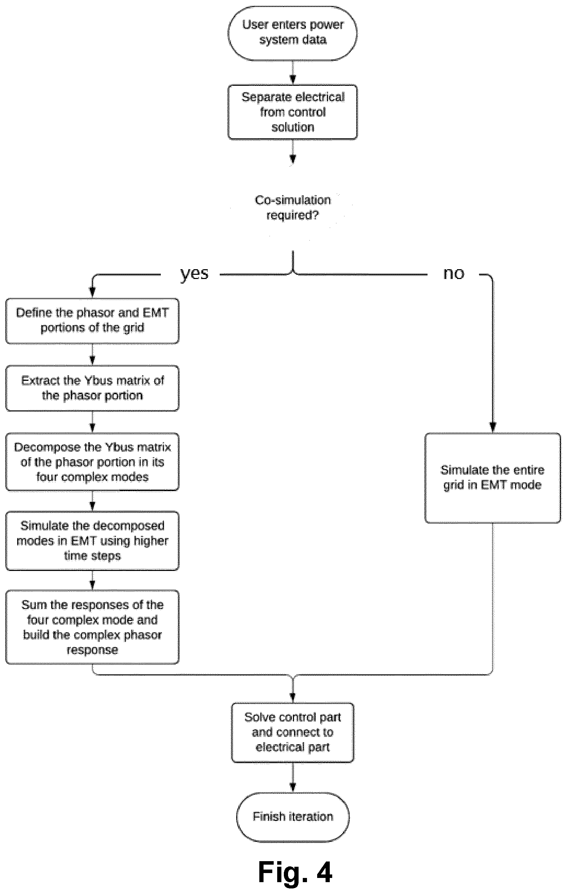

With reference to Fig. 4, this figure illustrates another embodiment of the proposed method. In this embodiment, the process begins with the user entering the relevant power grid data, which may include information about the network's topology, electrical parameters, and control settings. Following this, the electrical and control solutions of the power grid are separated to facilitate parallel processing. In the scenario where simulation of the power grid is required, the method proceeds by defining the phasor and EMT portions of the power grid. Once defined, the Ybus matrix of the phasor portion is extracted, corresponding to step i of the previous embodiment, where the grid admittance matrix is constructed.

Subsequently, the Ybus matrix of the phasor portion is decomposed into its four complex modes, a process that aligns with steps ii through iv of the previous embodiment. This involves the sequential or parallel calculations of the conductance and susceptance matrices, which are multiplied by the real and imaginary parts of the nodal currents to derive the required components. The decomposed modes are then simulated within the EMT framework using higher time steps. Once the responses of the four complex modes are obtained, they are combined to reconstruct the complex phasor response, as described in equation (4).

Finally, the method concludes by solving the control part of the system and integrating it with the electrical portion of the power grid, ensuring seamless interaction and accurate simulation of the overall grid behavior.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

**REFERENCES**

[1] M. Paolone, T. Gaunt, X. Guillaud, M. Liserre, S. Meliopoulos, A. Monti, T. V. Cutsem, V. Vittal, and C. Vournas, "Fundamentals of power systems modelling in the presence of converter-interfaced generation," Electr. Power Syst. Res, vol. 189, p. 106811, dec 2020.

[2] CIGRE WG C4-56, Technical Brochure 881: Electromagnetic transient simulation models for large-scale system impact studies in power systems having a high penetration of inverter-connected generation. CIGRE, 2022.

[3] V. A. Lacerda, E. P. Araujo, M. Cheah-Mane, and O. Gomis-Bellmunt, "Phasor modeling approaches and simulation guidelines of voltage-source converters in grid-integration studies," IEEE Access, vol. 10, pp. 51 826-51 838, 2022.

[4] A. Morched, J. Ottevangers, and L. Marti, "Multi-port frequency dependent network equivalents for the EMTP," IEEE Transactions on Power Delivery, vol. 8, no. 3, pp. 1402-1412, jul 1993.

[5] B. Gustavsen and H. M. J. D. Silva, "Inclusion of rational models in an electromagnetic transients program: Y-parameters, z-parameters, s-parameters, transfer functions," IEEE Transactions on Power Delivery, vol. 28, no. 2, pp. 1164-1174, apr 2013.

[6] U. D. Annakkage, N. K. C. Nair, Y. Liang, A. M. Gole, V. Dinavahi, B. Gustavsen, T. Noda, H. Ghasemi, A. Monti, M. Matar, R. Iravani, and J. A.

Martinez, "Dynamic system equivalents: A survey of available techniques," IEEE Transactions on Power Delivery, vol. 27, no. 1, pp. 411-420, jan 2012.

[7] V. Jalili-Marandi, V. Dinavahi, K. Strunz, J. A. Martinez, and A. Ramirez, "interfacing techniques for transient stability and electromagnetic transient programs IEEE task force on interfacing techniques for simulation tools," IEEE Transactions on Power Delivery, vol. 24, no. 4, pp. 2385-2395, oct 2009.

[8] Y. Zhang, A. M. Gole, W. Wu, B. Zhang, and H. Sun, "Development and analysis of applicability of a hybrid transient simulation platform combining TSA and EMT elements," IEEE Transactions on Power Systems, vol. 28, no. 1, pp. 357-366, feb 2013.

[9] R. Venkatraman, S. K. Khaitan, and V. Ajjarapu, "Dynamic co-simulation methods for combined transmission-distribution system with integration time step impact on convergence," IEEE Transactions on Power Systems, vol. 34, no. 2, pp. 1171-1181, mar 2019.

[10] J. Mahseredjian, S. Dennetière, L. Dubé, B. Khodabakhchian, and L. Gérin-Lajoie, "On a new approach for the simulation of transients in power systems," Electric Power Systems Research, vol. 77, no. 11, pp. 1514-1520, 2007.

[11] J. C. G. de Siqueira, B. D. Bonatto, J. R. Marti, J. A. Hollman, and H. W. Dommel, "Optimum time step size and maximum simulation time in EMTP-based programs," in 2014 Power Systems Computation Conference, aug 2014.

[12] H. Dommel, "Digital computer solution of electromagnetic transients in single-and multiphase networks," IEEE Transactions on Power Apparatus and Systems, vol. PAS-88, no. 4, pp. 388-399, apr 1969.

[13] S. Peyghami, P. Davari, M. Fotuhi-Firuzabad, and F. Blaabjerg, "Standard test systems for modern power system analysis: An overview," IEEE Ind. Electron. Mag, vol. 13, no. 4, pp. 86-105, dec 2019.

[14] R. D. Zimmerman and C. E. Murillo-Sanchez, "Description of case 9," 2005. [Online]. Available: https://matpower. org/docs/ref/matpower5.0/case9.html

[15] S. Cole and R. Belmans, "case9dyn.m," 2020. [Online]. Available: https://www.esat.kuleuven.be/electa/teaching/ matdyn/.

**Claims**

1. A computer implemented method for time-domain phasor simulation of a power grid in an EMT simulation software, the method comprising performing by one or more processors the following steps:

   a) building a grid impedance matrix from passive electrical elements of the power grid;
   b) separating the built grid impedance matrix into a real part and an imaginary part;
   c) computing an inverse matrix of the real part and of the imaginary part of the grid impedance matrix, the inverse of the real part being named conductance matrix and the inverse of the imaginary part being named susceptance matrix;
   d) computing nodal current injections from all the active elements or sources of the power grid;
   e) separating the computed nodal current injections into a real part and an imaginary part;
   f) executing a nodal analysis algorithm or an extended or modified nodal analysis algorithm on:

      f1) the conductance matrix computed in step c) with the real part of the nodal current injection computed in step e),
      f2) the conductance matrix computed in step c) with imaginary part of the nodal current injection computed in step e),

f3) the susceptance matrix computed in step c) with the real part of the nodal current injection computed in step e), and

f4) the susceptance matrix computed in step c) with the imaginary part of the nodal current injection computed in step e),

obtaining four different real voltage vectors as a result; and

g) building a complex nodal voltage vector using the obtained four different real voltage vectors.

2.  The method of claim 1, wherein step g) comprises:

computing a real part of the complex nodal voltage vector as the voltage vector obtained from step f1) minus the voltage vector obtained from step f4); and

computing an imaginary part of the complex nodal voltage vector as the voltage vector obtained from step f2) plus the voltage vector obtained from step f3).

3.  The method of claim 1 or 2, wherein the passive electrical elements comprise resistances, capacitances, and/or inductances.

4.  The method of claim 1 or 2, wherein the passive electrical elements comprise conductances and/or susceptances.

5.  The method of any one of the previous claims, wherein calculations f1) to f4) are sequentially executed.

6.  The method of any one of the previous claims 1 to 4, wherein calculations f1) to f4) are executed in parallel.

7.  The method of any one of the previous claims, wherein the extended or modified nodal analysis algorithm comprises a modified nodal analysis algorithm, a sparse nodal analysis algorithm or a modified augmented nodal analysis algorithm.

8.  A system for time-domain phasor simulation of a power grid in an EMT simulation software, comprising at least one processor and at least one memory, wherein the at least one processor is configured to:

a) build a grid impedance matrix from passive electrical elements of the power grid;

b) separate the built grid impedance matrix into a real part and an imaginary part;

c) compute an inverse matrix of the real part and of the imaginary part of the grid impedance matrix, the inverse of the real part being named conductance matrix and the inverse of the imaginary part being named susceptance matrix;

d) compute nodal current injections from all the active elements or sources of the power grid;

e) separate the computed nodal current injections into a real part and an imaginary part;

f) execute a nodal analysis algorithm or an extension or modification of the nodal analysis algorithm on:

f1) the conductance matrix computed in step c) with the real part of the nodal current injection computed in step e),

f2) the conductance matrix computed in step c) with imaginary part of the nodal current injection computed in step e),

f3) the susceptance matrix computed in step c) with the real part of the nodal current injection computed in step e), and

f4) the susceptance matrix computed in step c) with the imaginary part of the nodal current injection computed in step e),

obtaining four different real voltage vectors as a result; and

g) build a complex nodal voltage vector using the obtained four different real voltage vectors.

9.  A non-transitory computer readable medium including code instructions that when executed in a computer device implement a method to simulate time-domain phasor in an EMT simulation software according to any one of claims 1 to 7.

| Build a grid impedance matrix | 101 |

| Separate grid impedance matrix into real and imaginary parts | 102 |

| Compute inverse matrix of the real part and of the imaginary part of the grid impedance matrix | 103 |

| Compute nodal current injections | 104 |

| Separate nodal current injections into real and imaginary parts | 105 |

| Execute (modified) nodal analysis algorithm | 106 |

| Build complex nodal voltage vector | 107 |

# Fig. 1

Fig. 2

Fig. 3

## Fig. 4

Europäisches
Patentamt
European
Patent Office
Office européen
des brevets

**EUROPEAN SEARCH REPORT**

Application Number

EP 24 38 3329

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | XIONG MIN ET AL: "ParaEMT: An Open Source, Parallelizable, and HPC-Compatible EMT Simulator for Large-Scale IBR-Rich Power Grids", IEEE TRANSACTIONS ON POWER DELIVERY, IEEE SERVICE CENTER, NEW YORK, NY, US, vol. 39, no. 2, 12 December 2023 (2023-12-12), pages 911-921, XP011964241, ISSN: 0885-8977, DOI: 10.1109/TPWRD.2023.3342715 [retrieved on 2023-12-13] * abstract * * page 912 * * page 914 * | 1-9 | INV. H02J3/06 H02J3/26 H02J3/48 |
| Y | US 2013/226482 A1 (SUN HONGBO [US] ET AL) 29 August 2013 (2013-08-29) * figure 2 * * paragraph [0009] - paragraph [0010] * * paragraph [0028] - paragraph [0035] * | 1-9 | |
| A | CN 119 070 278 A (STATE GRID FUJIAN ELECTRIC POWER CO ET AL.) 3 December 2024 (2024-12-03) * figure 3 * | 1,8,9 | TECHNICAL FIELDS SEARCHED (IPC) H02J |

The present search report has been drawn up for all claims

| Place of search | Date of completion of the search | Examiner |
|---|---|---|
| Munich | 30 April 2025 | Despis, Enguerran |

EPO FORM 1503 03.82 (P04C01)

EP 4 757 098 A1

## ANNEX TO THE EUROPEAN SEARCH REPORT
## ON EUROPEAN PATENT APPLICATION NO.

EP 24 38 3329

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2025

| Patent document cited in search report | | Publication date | Patent family member(s) | | Publication date |
|---|---|---|---|---|---|
| US 2013226482 | A1 | 29-08-2013 | JP | 6025575 B2 | 16-11-2016 |
| | | | JP | 2013176281 A | 05-09-2013 |
| | | | US | 2013226482 A1 | 29-08-2013 |
| CN 119070278 | A | 03-12-2024 | NONE | | |

EPO FORM P0459

For more details about this annex : see Official Journal of the European Patent Office, No. 12/82

12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. PAOLONE ; T. GAUNT ; X. GUILLAUD ; M. LISERRE ; S. MELIOPOULOS ; A. MONTI ; T. V. CUTSEM ; V. VITTAL ; C. VOURNAS**. Fundamentals of power systems modelling in the presence of converter-interfaced generation. *Electr. Power Syst. Res*, December 2020, vol. 189, 106811
- **V. A. LACERDA ; E. P. ARAUJO ; M. CHEAH-MANE ; O. GOMIS-BELLMUNT**. Phasor modeling approaches and simulation guidelines of voltage-source converters in grid-integration studies. *IEEE Access*, 2022, vol. 10, 51 826-51 838
- **A. MORCHED ; J. OTTEVANGERS ; L. MARTI**. Multi-port frequency dependent network equivalents for the EMTP. *IEEE Transactions on Power Delivery*, July 1993, vol. 8 (3), 1402-1412
- **B. GUSTAVSEN ; H. M. J. D. SILVA**. Inclusion of rational models in an electromagnetic transients program: Y-parameters, z-parameters, s-parameters, transfer functions. *IEEE Transactions on Power Delivery*, April 2013, vol. 28 (2), 1164-1174
- Dynamic system equivalents: A survey of available techniques. *IEEE Transactions on Power Delivery*, January 2012, vol. 27 (1), 411-420
- **V. JALILI-MARANDI ; V. DINAVAHI ; K. STRUNZ ; J. A. MARTINEZ ; A. RAMIREZ**. interfacing techniques for transient stability and electromagnetic transient programs IEEE task force on interfacing techniques for simulation tools. *IEEE Transactions on Power Delivery*, October 2009, vol. 24 (4), 2385-2395
- **Y. ZHANG ; A. M. GOLE ; W. WU ; B. ZHANG ; H. SUN**. Development and analysis of applicability of a hybrid transient simulation platform combining TSA and EMT elements. *IEEE Transactions on Power Systems*, February 2013, vol. 28 (1), 357-366

- **R. VENKATRAMAN ; S. K. KHAITAN ; V. AJJAR-APU**. Dynamic co-simulation methods for combined transmission-distribution system with integration time step impact on convergence. *IEEE Transactions on Power Systems*, March 2019, vol. 34 (2), 1171-1181
- **J. MAHSEREDJIAN ; S. DENNETIÈRE ; L. DUBÉ ; B. KHODABAKHCHIAN ; L. GÉRIN-LAJOIE**. On a new approach for the simulation of transients in power systems. *Electric Power Systems Research*, 2007, vol. 77 (11), 1514-1520
- **J. C. G. DE SIQUEIRA ; B. D. BONATTO ; J. R. MARTI ; J. A. HOLLMAN ; H. W. DOMMEL**. Optimum time step size and maximum simulation time in EMTP-based programs. *2014 Power Systems Computation Conference*, August 2014
- **H. DOMMEL**. Digital computer solution of electromagnetic transients in single-and multiphase networks. *IEEE Transactions on Power Apparatus and Systems*, April 1969, vol. PAS-88 (4), 388-399
- **S. PEYGHAMI ; P. DAVARI ; M. FOTUHI-FIRUZA-BAD ; F. BLAABJERG ; STANDARD TEST SYSTEMS FOR MODERN POWER SYSTEM ANALYSIS: AN OVERVIEW**. *IEEE Ind. Electron. Mag*, December 2019, vol. 13 (4), 86-105
- **R. D. ZIMMERMAN ; C. E. MURILLO-SANCHEZ**. *Description of case 9*, 2005, https://matpower.org/-docs/ref/matpower5.0/case9.html
- **S. COLE ; R. BELMANS**. *case9dyn.m*, 2020, https://www.esat.kuleuven.be/electa/teaching/mat-dyn